# FASCICULE DE BREVET EUROPEEN

(11) **EP 0 481 863 B1**
(45) Date de publication et mention de la délivrance du brevet: **12.04.1995**
(21) Numéro de dépôt: 91402732.1
(22) Date de dépôt: 14.10.1991
(51) Int. Cl.: B60J 10/06

(54) **Joint d'étanchéité pour vitres coulissantes de véhicules**
Dichtung für Fahrzeugschiebefenster
Sealing joint for sliding window in vehicle

(30) Priorité: 15.10.1990 FR 9012699
(43) Date de publication de la demande: 22.04.1992
(73) Titulaire: STANDARD PRODUCTS INDUSTRIEL, F-95871 Bezons (FR)
(72) Inventeur: Smadja, Jean-Claude, F-92200 Neuilly-sur-Seine (FR); Opman, Pierre, F-92200 Neuilly-sur-Seine (FR)
(74) Mandataire: Hasenrader, Hubert

(56) Documents cités:
- DE-A- 3 512 973
- FR-A- 2 633 661
- GB-A- 2 216 936

## Description

La présente invention concerne un joint d'étanchéité pour vitres coulissantes de véhicules.

Dans le cas où le déplacement sensiblement vertical de la vitre se fait sans organe de guidage (patin, etc.), il est nécessaire de recevoir son bord supérieur de façon enveloppante afin d'assurer une bonne étanchéité dans la partie haute.

Ceci est généralement réalisé, comme décrit dans le DE-A-3 512 973, au moyen d'un joint comprenant un élément de fixation sur la feuillure de carrosserie et un élément d'étanchéité constitué d'une partie interne et d'une partie externe se prolongeant par un organe basculant sous l'action de la vitre pour emprisonner son bord supérieur entre lesdites parties interne et externe.

Cependant, ce type de joint déformable est trop souple et n'enveloppe pas suffisamment le bord de la vitre.

Il apparaît donc que la position, au repos, de l'organe basculant est aléatoire car non maîtrisé du fait de sa grande liberté de mouvement. Dans certaines circonstances, il pourrait même arriver que le bord supérieur de la vitre ne puisse pas venir en contact avec l'organe basculant décalé du fait de son déport. Cela serait notamment le cas dans les zones courbes de la carrosserie. Par ailleurs, lors de la montée de la vitre, il n'existe aucune face rigide formant butée, dont la position est fixe et invariable.

La présente invention a pour but de résoudre ces problèmes techniques.

Ce but est atteint au moyen d'un joint d'étanchéité pour vitre coulissante de véhicule comprenant :
- un élément de fixation sur la feuillure de carrosserie de véhicule;
- un élément d'étanchéité se composant :
   . d'une partie interne; une armature étant intégrée dans l'élément de fixation en U et se prolongeant dans la partie interne;
   . d'un organe basculant rigidifié par une armature et formé par une branche interne ; et,
   . d'une partie externe ; l'organe basculant étant pourvu d'une lèvre aux extrémités de sa branche interne
   une zone déformable comprise entre les deux armatures de telle sorte que, sous l'action de la vitre lors de sa fermeture, le bord supérieur de la vitre appuie contre la branche interne de l'organe basculant en provoquant l'emprisonnement du bord supérieur de la vitre entre la partie interne et la partie externe (Joint d'étanchéité du type divulgué par DE-A-3 512 973), caractérisé en ce que l'organe basculant possède une section en T dont la branche interne se partage vers l'extérieur en une branche latérale supérieure et en une branche latérale inférieure dans le prolongement l'une de l'autre de telle sorte que la branche latérale supérieure soit en contact d'appui avec la feuillure de la carrosserie, tandis que la zone déformable s'étend au moins partiellement de façon sensiblement parallèle à la feuillure entre une extrémité de l'armature de la partie interne et ladite branche latérale supérieure de l'organe basculant et en ce qu'il comprend, en outre, entre lesdites parties interne et externe un organe tubulaire déformable formé de la zone déformable, d'une paroi intérieure qui se trouve en contact avec la feuillure et d'une paroi externe au moins partiellement confondue avec la branche interne de l'élément basculant.

Selon un autre mode de réalisation de l'invention, ledit organe basculant pivote autour d'un axe confondu avec une génératrice de la zone déformable.

Selon encore un autre mode de réalisation de l'invention, la paroi externe de l'organe tubulaire s'étend entre la partie interne et l'extrémité de la branche interne de l'organe basculant. La lèvre située à l'extrémité de la branche interne de l'organe basculant est réalisée de façon à pivoter pour venir au contact du chant de la vitre.

La lèvre située à l'extrémité de la branche latérale inférieure de l'organe basculant est réalisée de façon à pivoter pour venir au contact de la face externe de la vitre.

De plus, la lèvre située à l'extrémité de la branche latérale supérieure de l'organe basculant est réalisée de façon à être au contact de la feuillure de carrosserie.

L'armature interne de l'organe basculant est au moins partiellement intégrée dans la paroi externe de l'organe tubulaire tandis que l'armature de la partie interne se prolonge jusque dans la paroi interne de l'organe tubulaire.

En outre, la branche latérale supérieure de l'organe basculant est sensiblement perpendiculaire à la paroi interne de l'organe tubulaire.

Le joint d'étanchéité de l'invention permet d'assurer un basculement précis conduisant à un enveloppement efficace et particulièrement étanche du bord supérieur de la vitre.

On peut également adapter le joint basculant de l'invention à des dispositifs d'étanchéité des zones verticales de la vitre coulissante.

La présente invention sera mieux comprise à la lecture de la description qui va suivre en référence aux dessins annexés sur lesquels :
la figure 1 représente une vue en coupe transversale du joint de l'invention en position ouverte avec la vitre coulissante en position basse.
la figure 2 représente une vue en coupe transversale du joint de la figure 1 en position fermée avec la vitre en position haute.

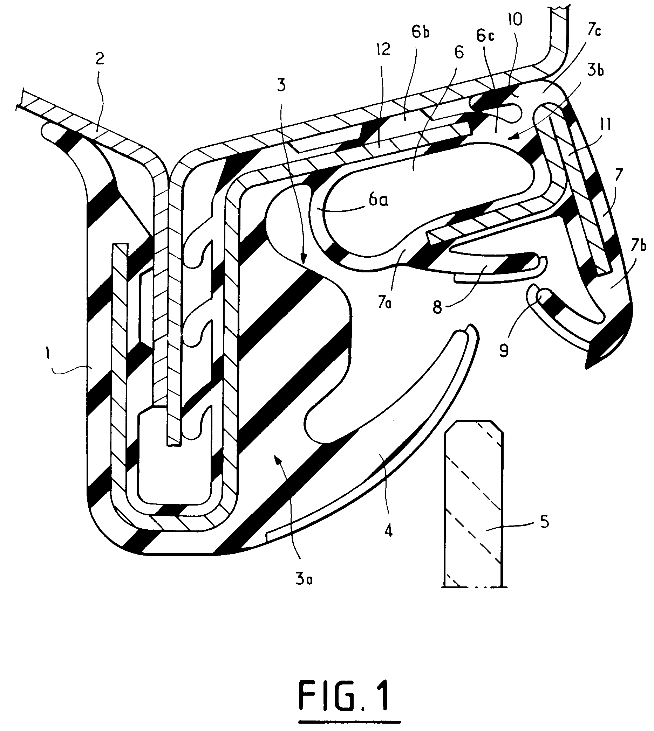

Le joint représenté sur la figure 1 comprend un élément de fixation 1 de section transversale en U destiné à venir se fixer sur la feuillure 2 de carrosserie.

L'élément de fixation est relié à un élément d'étanchéité 3 constitué d'une partie interne 3a et d'une partie externe 3b.

La partie interne 3a est munie d'un organe de léchage sous forme d'une lèvre 4 destiné à venir au contact de la face interne de la vitre 5 lors de sa fermeture.

La partie interne 3a se prolonge le long du profil de la feuillure 2 par la partie externe 3b.

La partie externe 3b comprend un organe d'étanchéité tubulaire déformable 6 adossé à la feuillure 2.

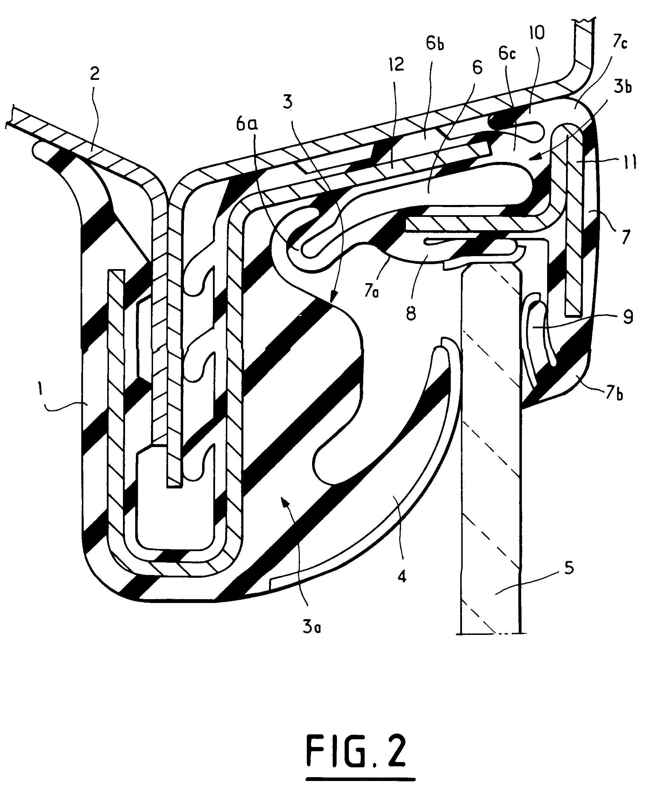

L'organe tubulaire 6 se prolonge vers l'extérieur par un organe d'étanchéité 7 de section transversale en T. La branche du T qui s'étend vers la partie interne 3a est au moins partiellement confondue avec la paroi extérieure de l'organe tubulaire 6. L'organe 7 en T bascule sous l'action de la vitre 5 lors de sa fermeture, de telle sorte que le bord supérieur de la vitre se trouve alors emprisonné entre les parties interne 3a et externe 3b du joint comme représenté sur la figure 2.

Afin de parfaire l'enveloppement du bord supérieur de la vitre 5 et donc l'étanchéité du montage, l'organe 7 en T est pourvu à chacune de ses extrémités d'une lèvre pivotante.

Ainsi, l'extrémité de la branche interne 7a de l'organe 7 est-elle munie d'une lèvre 8, destinée à venir au contact du chant de la vitre 5 pour isoler et protéger la paroi extérieure 6a de l'organe tubulaire 6.

De la même façon, l'extrémité de la branche latérale intérieure 7b de l'organe 7 en T est réalisée avec une lèvre 9 destinée à venir au contact de la face externe de la vitre 5.

En position d'ouverture, les lèvres 8, 9 sont donc sensiblement en regard afin de pivoter vers les branches du T sous l'action du bord supérieur de la vitre 5 lors de la fermeture.

L'extrémité de la branche latérale extérieure 7c de l'organe 7 en T se prolonge également par une lèvre 10 venant au contact de la feuillure de carrosserie.

L'organe 7 en T est également pourvu d'une armature interne 11 noyée au moins partiellement dans le matériau constitutif du joint et destinée à rigidifier l'organe 7 pour améliorer sa résistance et faciliter son basculement. L'armature 11 est de forme générale en T en suivant le profil de l'organe 7 et en étant au moins partiellement intégrée dans la paroi extérieure 6a de l'organe tubulaire 6. L'armature 11 est disjointe de l'armature interne 12 qui est intégrée dans l'élément de fixation en U et qui se prolonge dans la partie interne 3a de l'élément d'étanchéité 3 jusqu'à la paroi intérieure 6b de l'organe tubulaire 6 qui se trouve au contact de la feuillure.

Il subsiste ainsi entre l'armature 11 et l'armature 12 une zone déformable 6c de la paroi de l'organe tubulaire 6.

Lors de la fermeture, sous l'action du bord supérieur de la vitre, on assiste donc à un double pivotement ; le premier est celui de l'organe 7 en T qui s'accompagne de la déformation de la zone déformable 6c de la paroi de l'organe tubulaire 6 et, le second, celui des lèvres 8 et 9 au contact du bord supérieur de la vitre 5.

Ces deux pivotements qui s'apparentent aussi à des basculements s'effectuent successivement par déplacement continu de la vitre 5 de sa position d'ouverture jusqu'à sa position de blocage en appui contre la partie externe 3b où l'étanchéité est alors réalisée en trois points au moyen des lèvres 4, 8 et 9.

Le pivotement de l'organe 7 en T s'effectue autour d'un axe situé approximativement au niveau d'une génératrice de l'organe tubulaire 6 dans la partie extérieure de sa paroi, entre les armatures 11 et 12.

Lors de la descente de la vitre 5, la partie externe 3b est rappelée dans sa position initiale sous l'effet de ressort produit par la zone déformable 6c de la paroi de l'organe tubulaire 6.

## Revendications

1. Joint d'étanchéité pour vitre coulissante (5) de véhicule comprenant :
- un élément de fixation (1) sur la feuillure (2) de carrosserie de véhicule ;
- un élément d'étanchéité (3) se composant :
. d'une partie interne (3a) ; une armature (12) étant intégrée dans l'élément de fixation (1) en U et se prolongeant dans la partie interne (3a);
. d'un organe basculant (7) rigidifié par une armature (11) et formé par une branche interne (7a) ; et,
. d'une partie externe (3b) ; l'organe basculant (7) étant pourvu d'une lèvre (8,9,10) aux extrémités de sa branche interne (7a)
- une zone déformable (6c) comprise entre les deux armatures (11,12) de telle sorte que, sous l'action de la vitre (5) lors de sa fermeture, le bord supérieur de la vitre (5) appuie contre la branche interne (7a) de l'organe basculant (7) en provoquant l'emprisonnement du bord supérieur de la vitre (5) entre la partie interne (3a) et la partie externe (3b),
caractérisé en ce que l'organe basculant (7) possède une section en T dont la branche interne (7a) se partage vers l'extérieur en une branche latérale supérieure (7c) et en une branche latérale inférieure (7b) dans le prolongement l'une de l'autre de telle sorte que la branche latérale supérieure (7c) soit en contact d'appui avec la feuillure de la carrosserie, tandis que la zone déformable (6c) s'étend au moins partiellement de façon sensiblement parallèle à la feuillure entre une extrémité de l'armature (12) de la partie interne (3a) et ladite branche latérale supérieure (7c) de l'organe basculant (7) et en ce qu'il comprend, en outre, entre lesdites parties interne (3a) et externe (3b) un organe tubulaire déformable (6) formé de la zone déformable (6c), d'une paroi intérieure (6b) qui se trouve en contact avec la feuillure et d'une paroi externe (6a) au moins partiellement confondue avec la branche interne (7a) de l'élément basculant (7).

2. Joint d'étanchéité selon la revendication 1, caractérisé en ce que ledit organe basculant (7) pivote autour d'un axe confondu avec une génératrice de la zone déformable (6c).

3. Joint d'étanchéité selon l'une des revendications 1 ou 2, caractérisé en ce que la paroi externe (6a) de l'organe tubulaire (6) s'étend entre la partie interne (3a) et l'extrémité de la branche interne (7a) de l'organe basculant (7).

4. Joint d'étanchéité selon l'une des revendications précédentes, caractérisé en ce que la lèvre (8) située à l'extrémité de la branche interne (7a) de l'organe basculant (7) est réalisée de façon à pivoter pour venir au contact du chant de la vitre (5).

5. Joint d'étanchéité selon l'une des revendications précédentes, caractérisé en ce que la lèvre (9) située à l'extrémité de la branche latérale inférieure (7b) de l'organe basculant (7) est réalisée de façon à pivoter pour venir au contact de la face externe de la vitre (5).

6. Joint d'étanchéité selon l'une des revendications précédentes, caractérisé en ce que la lèvre (10) située à l'extrémité de la branche latérale supérieure (7c) de l'organe basculant est réalisée de façon à être au contact de la feuillure (2) de carrosserie.

7. Joint d'étanchéité selon l'une des revendications précédentes, caractérisé en ce que l'armature interne (11) de l'organe basculant (7) est au moins partiellement intégrée dans la paroi externe (6a) de l'organe tubulaire (6).

8. Joint d'étanchéité selon l'une des revendications précédentes, caractérisé en ce que la branche latérale supérieure (7c) de l'organe basculant (7) est sensiblement perpendiculaire à la paroi interne (6b) de l'organe tubulaire (6).

9. Joint d'étanchéité selon l'une des revendications précédentes, caractérisé en ce que l'armature interne (11) de l'organe basculant (7) a une section en T de telle sorte que les branches interne (7a), latérale inférieure (7b) et latérale supérieure (7c) soient toutes armées.

10. Joint d'étanchéité selon l'une des revendications précédentes, caractérisé en ce que l'armature (12) de la partie interne (3a) se prolonge jusque dans la paroi interne (6b) de l'organe tubulaire (6).

## Claims

1. Seal for sliding window (5) of vehicle including:
- an element (1) for fixing to the rebate (2) of the vehicle body;
- a sealing element (3) composed of:
. an inner portion (3a), a reinforcement (12) being integrated in the fixing element (1) in a U-shape and extended into the inner portion (3a);
. a tilting member (7) stiffened by a reinforcement (11) and formed by an inner branch (7a); and
. an outer portion (3b), the tilting member (7) being provided with a lip (8, 9, 10) at the ends of its inner branch (7a),
- a deformable zone (6c) between the two reinforcements (11, 12) so that, under the action of the window (5) upon closure thereof, the upper edge of the window (5) abuts against the inner branch (7a) of the tilting member (7), causing imprisonment of the upper edge of the window (5) between the inner portion (3a) and the outer portion (3b),
characterised in that the tilting member (7) has a T-shaped section of which the inner branch (7a) is divided towards the exterior into an upper side branch (7c) and a lower side branch (7b) in extension of each other so that the upper side branch (7c) is in abutting contact with the rebate of the body, while the deformable zone (6c) extends at least partially substantially parallel to the rebate between one end of the reinforcement (12) of the inner portion (3a) and said upper side branch (7c) of the tilting member (7), and in that it further includes between said inner (3a) and outer (3b) portions a deformable tubular member (6) formed by the deformable zone (6c), an inner wall (6b) which is in contact with the rebate and an outer wall (6a) at least partially coinciding with the inner branch (7a) of the tilting element (7).

2. Seal according to claim 1, characterised in that said tilting member (7) pivots about an axis coinciding with a generatrix of the deformable zone (6c).

3. Seal according to either of claims 1 or 2, characterised in that the outer wall (6a) of the tubular member (6) extends between the inner portion (3a) and the end of the inner branch (7a) of the tilting member (7).

4. Seal according to any of the preceding claims, characterised in that the lip (8) situated at the end of the inner branch (7a) of the tilting member (7) is constructed so as to pivot in order to come into contact with the edge of the window (5).

5. Seal according to any of the preceding claims, characterised in that the lip (9) situated at the end of the lower side branch (7b) of the tilting member (7) is constructed so as to pivot in order to come into contact with the outer face of the window (5).

6. Seal according to any of the preceding claims, characterised in that the lip (10) situated at the end of the upper side branch (7c) of the tilting member is constructed so as to be in contact with the rebate (2) of the body.

7. Seal according to any of the preceding claims, characterised in that the inner reinforcement (11) of the tilting member (7) is at least partially integrated in the outer wall (6a) of the tubular member (6).

8. Seal according to any of the preceding claims, characterised in that the upper side branch (7c) of the tilting member (7) is substantially perpendicular to the inner wall (6b) of the tubular member (6).

9. Seal according to any of the preceding claims, characterised in that the inner reinforcement (11) of the tilting member (7) has a T-shaped section so that the inner branch (7a), lower side branch (7b) and upper side branch (7c) are all reinforced.

10. Seal according to any of the preceding claims, characterised in that the reinforcement (12) of the inner portion (3a) is extended into the inner wall (6b) of the tubular member (6).

## Patentansprüche

1. Dichtung für eine in einer Führung gleitenden Fahrzeugfensterscheibe, die aufweist:
- ein Befestigungselement (1) auf dem Anschlag (2) der Fahrzeugkarrosserie;
- ein Dichtungselement (3), das sich zusammensetzt aus:
. einem inneren Abschnitt (3a); wobei eine Verstärkung (12) in das Befestigungselement U-förmig integriert ist und sich in dem inneren Abschnitt (3a) erstreckt;
. einem Kippelement (7), das durch eine Verstärkung (11) versteift ist und durch einen inneren Schenkel (7a) gebildet wird; und,
. einem äußeren Bereich (3b); wobei das Kippelement (7) mit einer Lippe (8, 9, 10) an den Enden des inneren Schenkels (7a) versehen ist
- einem verformbaren Bereich (6c), der zwischen den beiden Verstärkungen (11, 12) so umfaßt wird, daß, bei Betätigung der Fensterscheibe (5) beim Schließen, der obere Rand der Fensterscheibe (5), sich gegen den inneren Schenkel (7a) des Kippelements (7) stützt, was das Einschließen des oberen Rands der Fensterscheibe (5) zwischen den inneren Abschnitt (3a) und den äußeren Abschnitt (3b) hervorruft,
dadurch gekennzeichnet, daß das Kippelement (7) einen T-förmigen Abschnitt besitzt, dessen innerer Schenkel (7a) sich nach außen in einen oberen seitlichen Schenkel (7c) und einen unteren seitlichen Schenkel (7b) in der Verlängerung des einen zum anderen so teilt, daß der seitliche obere Schenkel (7c) in Haltekontakt mit dem Abschlag der Karrosserie ist, während der verformbare Bereich (6c) sich mindestens teilweise im wesentlichen parallel zum Anschlag zwischen einem Ende der Verstärkung (12) des inneren Abschnitts (3a) und des oberen seitlichen Schenkels (7c) des Kippelements (7) erstreckt und daß es außerdem zwischen den inneren (3a) und äußeren (3b) Abschnitten ein rohrförmiges verformbares Element (6) aufweist, das von dem verformbaren Bereich (6c), einer inneren Wand (6b), die sich in Kontakt mit dem Anschlag befindet und einer äußeren Wand (6a), die mindestens teilweise mit dem inneren Schenkel (7a) des Kippelements (7) zusammenfällt, gebildet wird.

2. Dichtung nach Anspruch 1, dadurch gekennzeichnet, daß sich das Kippelement (7) um eine mit einer Mantellinie des verformbaren Bereichs (6c) zusammenfallenden Achse dreht.

3. Dichtung nach einem der Ansprüche 1 oder 2, dadurch gekennzeichnet, daß die äußere Wand (6a) des rohrförmigen Elements (6) sich zwischen dem inneren Abschnitt (3a) und dem Ende des inneren Schenkels (7a) des Kippelements (7) erstreckt.

4. Dichtung nach einem der vorhergehenden Ansprüche, dadurch gekennzeichnet, daß die am Ende des inneren Schenkels (7a) des Kippelements (7) angeordnete Lippe (8) so realisiert ist, daß sie sich drehen kann, um mit der Schmalseite der Fensterscheibe (5) in Kontakt zu kommen.

5. Dichtung nach einem der vorhergehenden Ansprüche, dadurch gekennzeichnet, daß die am Ende des seitlichen inneren Schenkels (7b) des Kippelements (7) angeordnete Lippe (9) so realisiert ist, daß sie sich drehen kann, um mit der äußeren Fläche der Fensterscheibe (5) in Kontakt zu kommen.

6. Dichtung nach einem der vorhergehenden Ansprüche, dadurch gekennzeichent, daß die am Ende des seitlichen oberen Schenkels (7c) des Kippelements angeordnete Lippe (10) so realisiert ist, daß sie mit dem Anschlag (2) der Karrosserie in Kontakt ist.

7. Dichtung nach einem der vorhergehenden Ansprüche, dadurch gekennzeichnet, daß die innere Verstärkung (11) des Kippelements (7) mindestens teilweise in die äußere Wand (6a) des rohrförmigen Elements (6) integriert ist.

8. Dichtung nach einem der vorhergehenden Ansprüche, dadurch gekennezeichnet, daß der seitliche obere Schenkel (7c) des Kippelements (7) im wesentlichen rechtwinklig zur inneren Wand (6b) des rohrförmigen Elements (6) ist.

9. Dichtung nach einem der vorhergehenden Ansprüche, dadurch gekennzeichnet, daß die innere Verstärkung (11) des Kippelements (7) einen T-förmigen Abschnitt aufweist, so daß die inneren (7a), seitlichen unteren (7b) und seitlichen oberen (7c) Schenkel alle verstärkt sind.

10. Dichtung nach einem der vorhergehenden Ansprüche, dadurch gekennzeichnet, daß die Verstärkung (12) des inneren Abschnitts (3a) sich bis in die innere Wand (6b) des rohrförmigen Elements (6) erstreckt.
